Europäisches Patentamt

European Patent Office

Office européen des brevets

(19)

(11) Veröffentlichungsnummer: **0 076 927**
**B1**

(12) # EUROPÄISCHE PATENTSCHRIFT

(45) Veröffentlichungstag der Patentschrift:
10.07.85

(21) Anmeldenummer: 82108241.9

(22) Anmeldetag: 08.09.82

(51) Int. Cl.⁴: **C 04 B 22/06**, C 04 B 24/04

(54) **Alkalifreier Abbindebeschleuniger für hydraulische Bindemittel.**

(30) Priorität: 12.10.81 CH 6513/81

(43) Veröffentlichungstag der Anmeldung:
20.04.83 Patentblatt 83/16

(45) Bekanntmachung des Hinweises auf die Patenterteilung:
10.07.85 Patentblatt 85/28

(84) Benannte Vertragsstaaten:
AT BE CH DE FR GB IT LI NL SE

(56) Entgegenhaltungen:
EP - A - 0 026 262
DE - A - 2 548 687
FR - A - 2 471 955

Chemical Abstract Band 86, Nr. 18, Mai 1977 Columbus,
Ohio, USA Seite 300, Spalte 2, Abstract Nr. 126087c

(73) Patentinhaber: Sika AG, vorm. Kaspar Winkler & Co.,
Tüffenwies 16-22, CH-8048 Zürich (CH)

(72) Erfinder: Bürge, Theodor, Waldrütistrasse 3,
CH-8954 Geroldswil (CH)
Erfinder: Bodenmann, Eugen, Schauenbergstrasse 21,
CH-8046 Zürich (CH)

(74) Vertreter: Blum, Rudolf Emil Ernst et al, c/o E. Blum &
Co Patentanwälte Vorderberg 11, CH-8044 Zürich (CH)

## Beschreibung

Gegenstand der vorliegenden Erfindung ist ein amorphes Aluminiumhydroxid enthaltender Abbindebeschleuniger und ein Verfahren zur Beschleunigung des Abbindens hydraulischer Bindemittel, wie Zement, Kalk, hydraulischer Kalk und Gips und daraus hergestelltem Mörtel und Beton durch einen derartigen Beschleuniger. Anwendungsmöglichkeiten dieses Verfahrens liegen in der Herstellung vorfabrizierter Elemente und dem Beschleunigen von auf der Baustelle hergestellten Betons. Im ersten Falle kann die übliche Erhärtungsbeschleunigung durch Wärme (Elektro- oder Ölheizung oder Dampf) verkürzt oder gar eliminiert werden. Im zweiten Falle können die Ausschalfristen für den Beton verkürzt werden oder es kann auch bei tiefer Temperatur weiter betoniert werden.

In all diesen Fällen bringt das erfindungsgemäße Verfahren erhebliche, wirtschaftliche Vorteile. Ein besonderes Einsatzgebiet ist der Spritzmörtel und Spritzbeton.

Solche Mörtel und Betone dienen zur Herstellung von Bauwerken des Hoch- und Tiefbaues sowie für den Ausbau und die Auskleidung von unterirdischen, natürlich oder künstlich geschaffenen Hohlräumen, wie Stollen-, Tunnel- oder Bergbauten, bei welchen der Beton den statischen Erfordernissen entsprechen sowie wasserdicht sein muß. Sie dienen ebenfalls zur Konsolidierung von Baugruben, Böschungen, lockeren Felswänden etc.

Es sind bereits viele Substanzen bekannt, welche das Abbinden und Erhärten von Beton beschleunigen: Die gebräuchlichsten sind u. a. stark alkalisch reagierende Stoffe wie Alkalihydroxide, Alkalikarbonate, Alkalisilikate, Alkalialuminate und Erdalkalichloride.

Bei den stark alkalisch reagierenden Stoffen treten unerwünschte Belästigungen des Verarbeiters auf. So können solche Produkte die Haut sehr stark verätzen und Augenentzündungen verursachen, welche die Sehfähigkeit beeinträchtigen können. Durch Einatmen des beim Verarbeiten entstehenden Staubes können auch schädliche Auswirkungen auf die Atemwege entstehen.

Betontechnologisch gesehen, reduzieren stark alkalische Abbindebeschleuniger die Endfestigkeiten, vergrößern das Schwinden, was zu Rißbildung führen kann und deshalb die Dauerhaftigkeit eines Bauwerkes in Frage stellt.

Chloridhaltige Abbindebeschleuniger sind in der Regel auf einer Baustelle unerwünscht, weil sie sowohl an den Armierungseisen im Beton wie auch an Baustellengeräten zur Korrosion führen können.

Im weiteren ist bekannt, daß chloridhaltige Abbindebeschleuniger die Chemikalienbeständigkeit, vor allem die Sulfatbeständigkeit des Zementes, stark reduzieren.

Beschleuniger des Abbindens hydraulischer Bindemittel auf Basis von amorphem Aluminiumhydroxid sind bereits bekannt aus EP-A-0 026 262, insbesondere Ansprüche 1 und 11 bis 13, sowie aus Chemical Abstracts Band 86, Nummer 18, Mai 1977, Seite 300, 126087c.

Gemäß EP-A-0 026 262, Seite 2, letzter Absatz liegt die Teilchengröße des amorphen Aluminiumhydroxids insbesondere im Bereich zwischen 4,8 und 5,4 μm.

Auch ein quellfähiges Celluloseprodukt und weitere Zusatzstoffe können in einem derartigen Erhärtungsbeschleuniger enthalten sein, vgl. EP-A-0 026 262, insbesondere Ansprüche 8 bis 10 und die Beispiele.

Aus der DE-A-2 548 687, insbesondere Patentanspruch und Seite 15, ist der Zusatz von Aluminiumsulfat oder Nitraten zu Abbindebeschleunigern auf Basis von Aluminat und Aluminiumoxid bekannt.

Aus der FR-A-2 471 955, insbesondere Ansprüche 1 und 6, ist die Verwendung von Formiaten und Nitraten in Beschleunigermischungen bekannt.

Überraschenderweise wurde nunmehr gefunden, daß völlig alkali- und chloridfreie Abbindebeschleuniger herstellbar sind, welche demzufolge die Haut und Augen nicht irritieren und die Korrosion nicht fördern.

Da die erfindungsgemäßen Abbindebeschleuniger keine Alkalien enthalten, werden weder die Festigkeitsentwicklung noch das Schwinden negativ beeinflußt. Diese Abbindebeschleuniger bestehen gänzlich oder zum Teil aus feinteiligem, amorphen Aluminiumhydroxid in Mischung mit wenigstens einem wasserlöslichen Sulfat und/oder Nitrat und/oder Formiat. Durch Abmischen des amorphen Aluminiumhydroxides mit wasserlöslichen Sulfaten, Nitraten, Formiaten der Erdalkali- und Übergangsmetalle wird der abbindebeschleunigende Effekt auf Zement in nicht zu erwartendem Maße gesteigert. Durch diese Abmischungen kann der Anteil Aluminiumhydroxid bei gleichbleibender Abbindebeschleunigung auf unter die Hälfte reduziert werden.

Einen analogen Effekt zeigen auch die löslichen Salze von Natrium oder Kalium oder Mischsalze wie beispielsweise Alaune, Natriumaluminiumsulfat oder Kaliumaluminiumsulfat.

Zur Verminderung der Staubentwicklung beim Verwenden des erfindungsgemäßen, alkali- und chloridfreiem Abbindebeschleunigers können wasserquellbare Stoffe wie Methyl-Hydroxyethyl-, Hydroxypropylcellulosen oder andere gemäß Patentanspruch 12 zugesetzt werden.

Die folgenden Beispiele sollen die Erfindung erläutern:

0 076 927

## Vorgehen

100 g Portlandzement werden mit 100 g feinem Quarzmehl <75 μm (6400 mesh) trocken vermischt. Dann wird die benötigte Menge Abbindebeschleuniger und 55 cm³ Wasser zugesetzt und 30 Sekunden gemischt. An der resultierenden Mörtelmischung werden die Abbindezeiten nach VICAT gemäß SIA NORM 215 oder DIN 1164 bestimmt.

Alle Resultate sind in den Figuren graphisch dargestellt.

Aufgezeichnet sind jeweils die Abbindezeiten von reinem Aluminiumhydroxid, dem wasserlöslichem Salz und einer Kombination von je gleichen Gewichtsteilen der beiden.

Überraschenderweise konnte dabei jeweils eine verstärkte Abbindebeschleunigung der Kombination gefunden werden, was nicht vorauszusehen war.

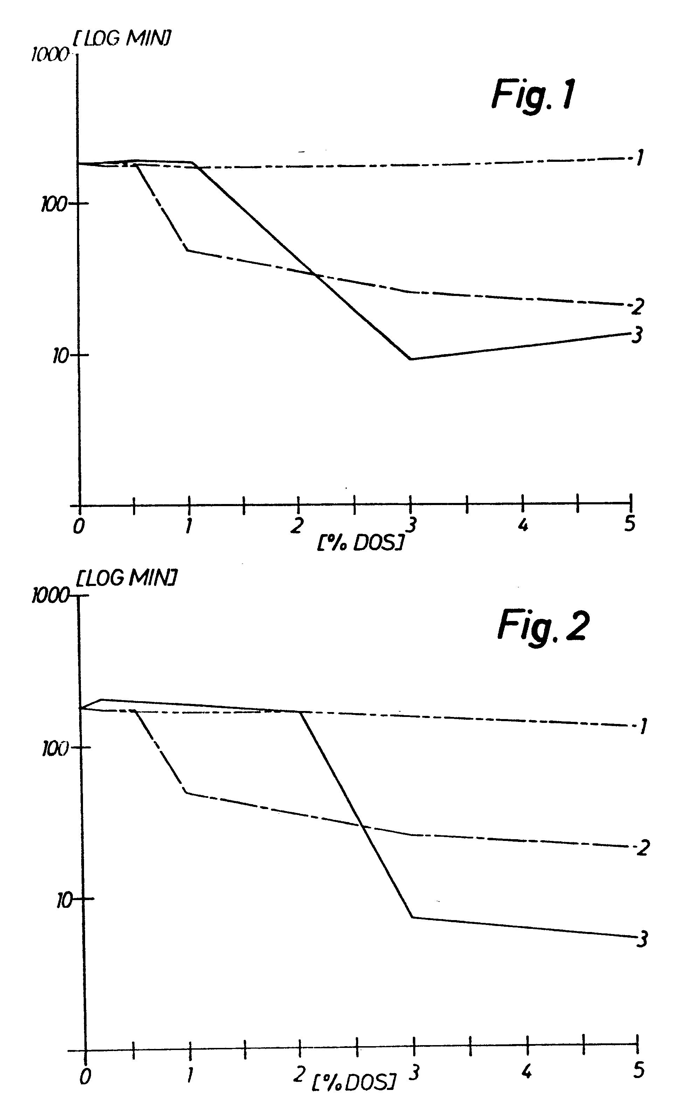

## Beispiele (Resultate siehe Figuren 1 bis 9)

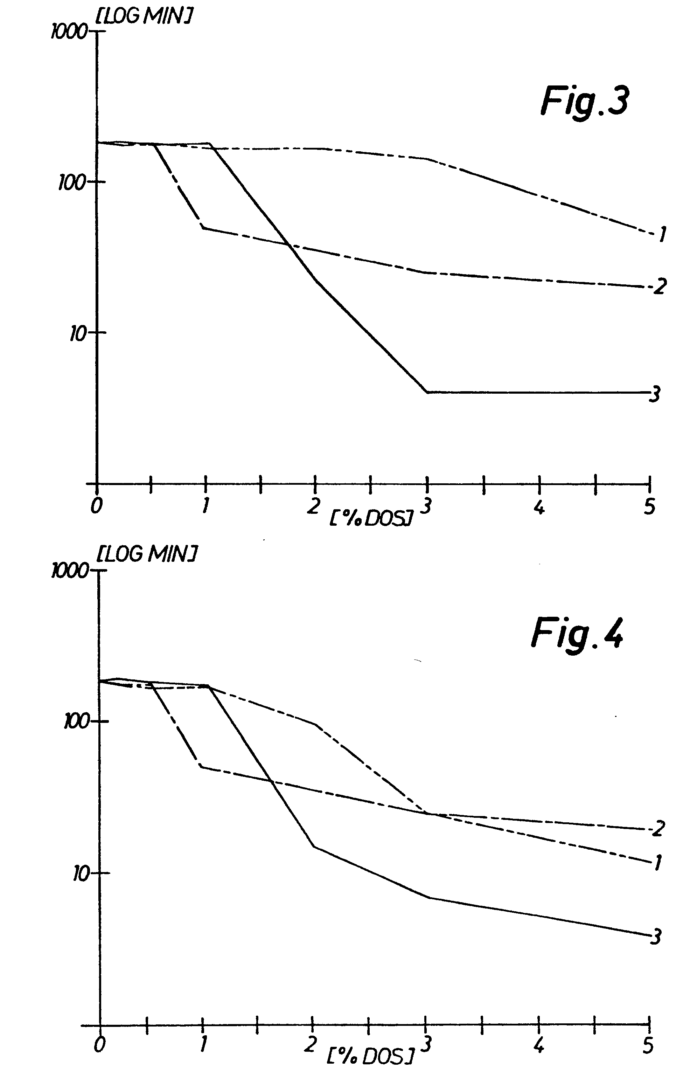

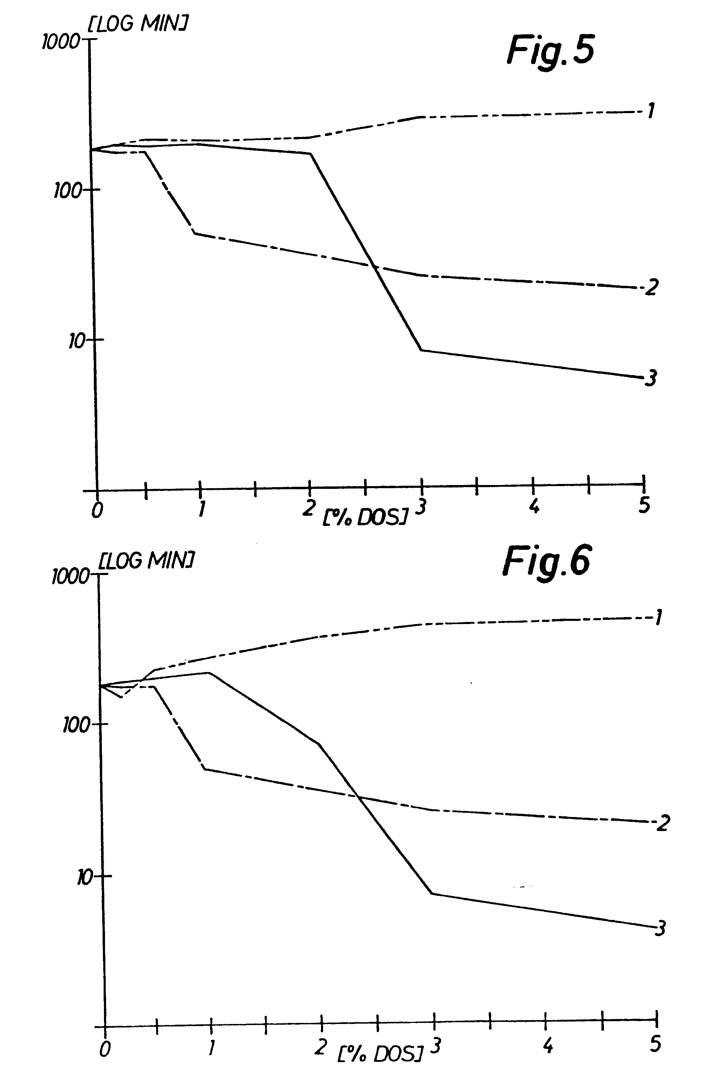

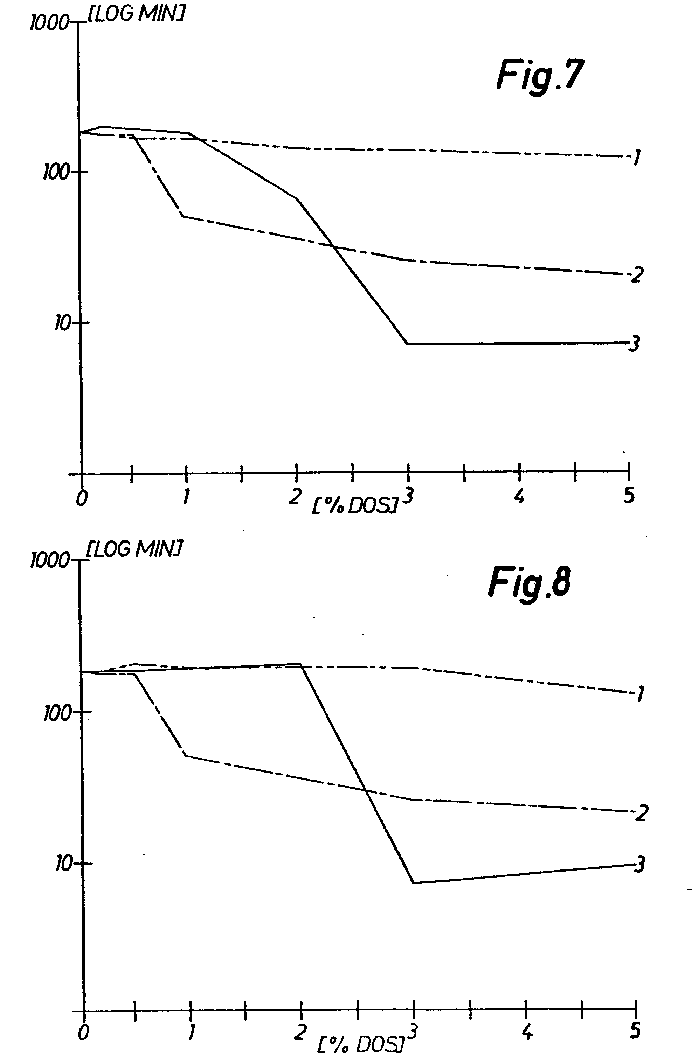

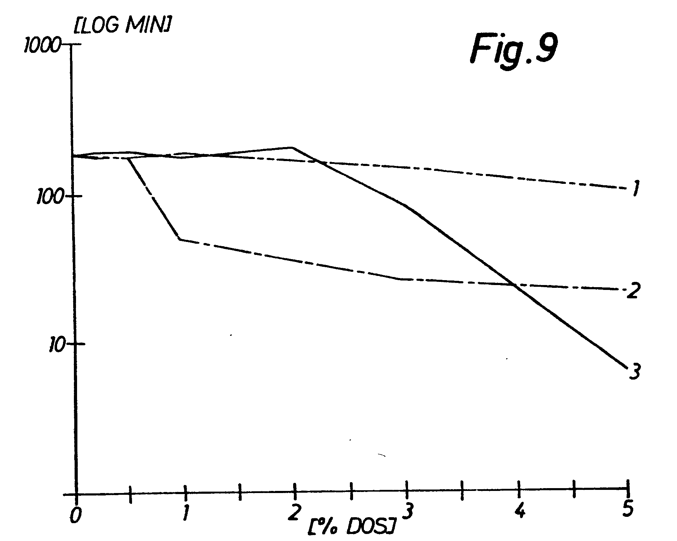

Nr. 1    Einfluß von Natriumnitrat (siehe Figur 1)
Nr. 2    Einfluß von Calciumnitrat (siehe Figur 2)
Nr. 3    Einfluß von Kaliumaluminiumsulfat (siehe Figur 3)
Nr. 4    Einfluß von Aluminiumsulfat (siehe Figur 4)
Nr. 5    Einfluß von Magnesiumsulfat (siehe Figur 5)
Nr. 6    Einfluß von Eisensulfat (siehe Figur 6)
Nr. 7    Einfluß von Natriumsulfat (siehe Figur 7)
Nr. 8    Einfluß von Kaliumsulfat (siehe Figur 8)
Nr. 9    Einfluß von Natriumformiat (siehe Figur 9)

In den Beispielen 1 bis 9 betrug beim Abbindebeginn PC : Quarzmehl = 1 : 1 und W/Z = 0,55.

In den Figuren 1 bis 9 zeigt die Kurve 1 die Abbindezeit des im entsprechenden Beispiel verwendeten, weiter oben angegebenen wasserlöslichen Salzes, die Kurve 2 zeigt die Abbindezeit von reinem Aluminiumhydroxid (Al(OH)₃) und die Kurve 3 zeigt die Abbindezeit einer 1 : 1 Kombination (Gewichtsteile) aus oben genanntem Salz und Al(OH)₃.

Aufgrund der gewünschten Abbindezeiten oder den aus der Praxis gestellten Anforderungen können nun die günstigsten Kombinationen ausgewählt werden. Die Auswahl wird ebenfalls durch die vorgesehene Arbeitsmethode bestimmt, sei es nun Transportbeton, Ortsbeton, Vorfabrikation oder Spritzbeton.

## Beispiel Nr. 10 (Vergleichsbeispiel)

Eine Mörtelmischung aus 3 Gew.-Teilen Sand und 1 Gew.-Teil Portlandzement wurde unter Zusatz von 5% eines konventionellen, alkalibasierten Beschleunigers gespritzt. Zur Anwendung gelangte eine Mörtelspritzmaschine Typ ALIVA 240 mit 1 Liter Rotor. Nach 24 Stunden wurden aus dem erhärteten Spritzmörtel Bohrkerne entnommen und nach verschiedenen Zeiten die Druckfestigkeit bestimmt.

## Beispiel Nr. 11

Gleicher Versuch wie Beispiel Nr.10, aber unter Verwendung von 5% eines erfindungsgemäßen, alkalifreien und chloridfreien Abbindebeschleunigers.

Die Bestimmung der Druckfestigkeiten aus Beispiel Nr. 10 und Nr. 11 gab die folgenden Resultate in MPa (Mittelwert aus jeweils 3 Bohrkernen).

3

| Alter des Bohrkerns | konventioneller Abbinde- beschleuniger | erfindungsgemäßer alkalifreier und chloridfreier Abbindebeschleuniger |
|---|---|---|
| 1 Tag | 11,5 | 15,8 |
| 3 Tage | 15,9 | 34,8 |
| 7 Tage | 20,2 | 42,9 |
| 28 Tage | 32,8 | 50,8 |
| 56 Tage | 34,5 | 52,3 |
| 90 Tage | 34,0 | 54,5 |
| 180 Tage | 33,3 | 63,1 |

Der positive Einfluß des alkalifreien und chloridfreien Abbindebeschleunigers auf die Druckfestigkeiten ist augenscheinlich.

Ein ebenso günstiger Einfluß konnte auf das Schwindverhalten festgestellt werden. Das Schwinden nach 28 Tagen war mit dem alkalifreien Abbindebeschleuniger ca. 30% kleiner.

Beispiel Nr. 12

Eine Mörtelmischung wie in Beispiel Nr. 10 beschrieben, wird in einem Falle mit einem konventionellen Abbindebeschleuniger verspritzt. Im anderen Falle wurde die gleiche Menge des erfindungsgemäßen Abbindebeschleunigers eingesetzt, welchem jedoch vorgängig 10% einer Methylcellulose beigemischt wurde. Mit einem »Massometer« wurde die Staubkonzentration während dem Spritzen gemessen. Der Meßort war 0,5 m hinter dem Düsenführer. Die Gesamtstaubmessung erfolgte 30 Sekunden nach Beginn des Spritzens. Die zweite Messung, bei welcher der lungengängige (Silikose bildende) Staub <5 μm Teilgröße gemessen wurde, fand 2 Minuten nach der ersten Messung statt.

| Zusatzmittel | Staubkonzentration in mg/m³ Luft | |
|---|---|---|
| | Gesamtstaub | Teilchen <5 μm |
| vor dem Spritzen | 0,06 | — |
| ohne | 17,5 | 8,9 |
| konventioneller Abbindebeschleuniger | 17,7 | 8,4 |
| erfindungsgemäßer Abbindebeschleuniger | 3,8 | 2,6 |

Der zulässige Grenzwert MAK von 8 mg/m³ Luft wird mit dem erfindungsgemäßen Zusatzmittel deutlich unterschritten.

Beim erfindungsgemäßen Verfahren wird ein Abbindebeschleuniger aus mindestens 10 Gew.-% amorphem Aluminiumhydroxid und bis zu 90 Gew.-% eines wasserlöslichen Sulfates, Nitrates oder Formiates und 0—30% eines quellbaren Polymers in einer Menge von 0,1—10% bezogen auf das Gewicht des Zementes eingesetzt.

Selbstverständlich können diese Zusatzmittel auch vorgemischt mit hydraulischem Bindemittel und Zuschlagstoffen in sog. Fertigmörtel eingesetzt werden.

# 0 076 927

**Patentansprüche**

1. Verfahren zur Beschleunigung des Abbindens und Erhärtens eines hydraulischen Bindemittels, wie Zement, Kalk, hydraulischer Kalk und Gips sowie daraus hergestelltem Mörtel und Beton, durch einen amorphes Aluminiumhydroxid enthaltenden Beschleuniger, dadurch gekennzeichnet, daß man einem Gemisch, welches das genannte Bindemittel enthält, 0,5 bis 10 Gew.-%, bezogen auf das Gewicht dieses Bindemittels, eines alkalifreien und chloridfreien Abbinde- und Erhärtungsbeschleunigers zugibt, wobei dieser Beschleuniger amorphes Aluminiumhydroxid in Mischung mit wenigstens einem wasserlöslichen Sulfat und/oder Nitrat und/oder Formiat enthält.

2. Verfahren nach Anspruch 1, dadurch gekennzeichnet, daß man feinteiliges, amorphes Aluminiumhydroxid mit einer Korngröße von 0,1 bis 5 μm verwendet.

3. Verfahren nach einem der Ansprüche 1 bis 2, dadurch gekennzeichnet, daß der Abbinde- und Erhärtungsbeschleuniger mindestens 10 Gew.-% amorphes Aluminiumhydroxid und bis zu 90 Gew.-% wenigstens eines wasserlöslichen Sulfates und/oder Nitrates und/oder Formiates enthält, wobei diese Sulfate, Nitrate und Formiate vorzugsweise in der Form von Salzen mit mehrwertigen Kationen eingesetzt werden.

4. Verfahren nach einem der Ansprüche 1 bis 3, dadurch gekennzeichnet, daß dem Abbinde- und Erhärtungsbeschleuniger bis zu 30 Gew.-% wenigstens einer quellfähigen Methyl-, Hydroxyethyl-, Hydroxypropyl-, Hydroxybutylcellulose, Hydroxyethylmethyl-, Hydroxypropylmethyl-, Hydroxybutylmethylcellulose zugemischt wird.

5. Verfahren nach einem der Ansprüche 1 bis 4, dadurch gekennzeichnet, daß der Abbinde- und Erhärtungsbeschleuniger mindestens 10 Gew.-% amorphes Aluminiumhydroxid, bis zu 90 Gew.-% wenigstens eines wasserlöslichen Sulfates und/oder Nitrates und/oder Formiates, und 0—30 Gew.-% wenigstens eines quellfähigen Polymers enthält.

6. Verfahren nach einem der Ansprüche 1 bis 5, dadurch gekennzeichnet, daß der Abbinde- und Erhärtungsbeschleuniger in Kombination mit bekannten Verflüssigern und Luftporenbildnern eingesetzt wird.

7. Verfahren nach einem der Ansprüche 1 bis 6, dadurch gekennzeichnet, daß der Abbinde- und Erhärtungsbeschleuniger als Pulver oder fein dispergiert in Wasser angewendet wird.

8. Verfahren nach einem der Ansprüche 1 bis 7, dadurch gekennzeichnet, daß der Abbinde- und Erhärtungsbeschleuniger vorgemischt in hydraulischen Bindemitteln und Zuschlagstoffen zur Anwendung gelangt.

9. Alkalifreier und chloridfreier und amorphes Aluminiumoxid enthaltender Abbinde- und Erhärtungsbeschleuniger, dadurch gekennzeichnet, daß er amorphes Aluminiumhydroxid in Mischung mit wenigstens einem wasserlöslichen Sulfat und/oder Nitrat und/oder Formiat enthält.

10. Abbinde- und Erhärtungsbeschleuniger nach Anspruch 9, dadurch gekennzeichnet, daß er amorphes feinteiliges Aluminiumhydroxid mit einer Korngröße von 0,1 bis 5 μm enthält.

11. Abbinde- und Erhärtungsbeschleuniger nach einem der Ansprüche 9 bis 10, dadurch gekennzeichnet, daß er mindestens 10 Gew.-% amorphes Aluminiumhydoxid und bis zu 90 Gew.-% wenigstens eines wasserlöslichen Sulfates und/oder Nitrates und/oder Formiates enthält, wobei diese Sulfate, Nitrate und Formiate vorzugsweise in der Form der Salze mehrwertiger Kationen eingesetzt werden.

12. Abbinde- und Erhärtungsbeschleuniger nach einem der Ansprüche 9 bis 11, dadurch gekennzeichnet, daß er bis zu 30 Gew.-% wenigstens einer quellfähigen Methyl-, Hydroxyethl-, Hydroxypropyl-, Hydroxybutylcellulose, Hydroxyethylmethyl-, Hydroxypropylmethyl-, Hydroxybutylmethylcellulose enthält.

13. Abbinde- und Erhärtungsbeschleuniger nach einem der Ansprüche 9 bis 12, dadurch gekennzeichnet, daß er mindestens 10 Gew.-% amorphes Aluminiumhydroxid, bis zu 90 Gew.-% wenigstens eines wasserlöslichen Sulfates und/oder Nitrates und/oder Formiates, und 0—30 Gew.-% wenigstens eines quellfähigen Polymers enthält.

14. Abbinde- und Erhärtungsbeschleuniger nach einem der Ansprüche 9 bis 13, dadurch gekennzeichnet, daß er mit bekannten Verflüssigern und Luftporenbildnern kombiniert ist.

**Claims**

1. A process for accelerating the setting and hardening of a hydraulic binder, such as cement, lime, hydraulic lime and gypsum, as well as mortar and concrete prepared thereof, by an accelerator containing amorphous aluminium hydroxide, characterized in that to a mixture containing said binder 0.5 to 10% by weight, referred to the weight of this binder, of an alkali free and chloride free setting and hardening accelerator is added, whereby this accelerator contains amorphous aluminium hydroxide in mixture with at least one water soluble sulfate and/or nitrate and/or formate.

2. The process according to claim 1, characterized in that finely powdered, amorphous aluminium hydroxide having a fineness of grain from 0.1 to 5 μm is used.

3. The process according to any of claims 1 to 2, characterized in that the setting and hardening accelerator contains at least 10% by weight of amorphous aluminium hydroxide and up to 90% by weight of at least one water soluble sulfate and/or nitrate and/or formate, whereby these sulfates, nitrates and formates are used preferably in the form of salts with multivalent cations.

4. The process according to any of claims 1 to 3, characterized in that the setting and hardening accelerator is mixed with up to 30% by weight of at least one swellable methyl-, hydroxyethyl-, hydroxypropyl-, hydroxybutylcellulose, hydroxyethylmethyl-, hydroxypropylmethyl-, hydroxybutylmethylcellulose.

5. The process according to any of claims 1 to 4, characterized in that the setting and hardening accelerator contains at least 10% by weight of amorphous aluminium hydroxide, up to 90% by weight of at least one water soluble sulfate and/or nitrate and/or formate, and 0—30% by weight of at least one swellable polymer.

6. The process according to any of claims 1 to 5, characterized in that the setting and hardening accelerator is used in combination with known condensers and air space producing agents.

7. The process according to any of claims 1 to 6, characterized in that the setting and hardening accelerator is used in the form of a powder or in finely dispersed form in water.

8. The process according to any of claims 1 to 7, characterized in that the setting and hardening accelerator is used as a premixed composition consisting of hydraulic binders and additives.

9. Alkali free and chloride free and amorphous aluminium hydroxide containing setting and hardening accelerator, characterized in that it contains amorphous aluminium hydroxide in mixture with at least one water soluble sulfate and/or nitrate and/or formate.

10. Setting and hardening accelerator according to claim 9, characterized in that it contains amorphous, finely powdered aluminium hydroxide having a fineness of grain from 0.1 to 5 μm.

11. Setting and hardening accelerator according to any of claims 9 to 10, characterized in that it contains at least 10% by weight of amorphous aluminium hydroxide and up to 90% by weight of at least one water soluble sulfate and/or nitrate and/or formate, whereby these sulfates, nitrates and formates are used preferably in the form of salts with multivalent cations.

12. Setting and hardening accelerator according to any of claims 9 to 11, characterized in that it contains up to 30% by weight of at least one swellable methyl-, hydroxyethyl-, hydroxypropyl-, hydroxybutylcellulose, hydroxyethylmethyl-, hydroxypropylmethyl-, hydroxybutylmethylcellulose.

13. Setting and hardening accelerator according to any of claims 9 to 12, characterized in that it contains at least 10% by weight of amorphous aluminium hydroxide, up to 90% by weight of at least one water soluble sulfate and/or nitrate and/or formate, and 0—30% by weight of at least one swellable polymer.

14. Setting and hardening accelerator according to any of claims 9 to 13, characterized in that it is combined with known condensers and air space producing agents.

**Revendications**

1. Procédé pour accélérer la prise et le durcissement d'un liant hydraulique tel que le ciment, la chaux, la chaux hydraulique et le gypse, ainsi que du mortier et du béton préparé avec ceux-ci, par un accélérateur contenant de l'hydroxyde d'aluminium amorphe, caractérisé en ce que l'on incorpore au mélange contenant ledit liant entre 0,5 et 10% en poids, par rapport au poids du liant, d'un accélérateur de prise et de durcissement exempt d'alcali et de chlorure, contenant de l'hydroxyde d'aluminium amorphe en mélange avec au moins un sulfate et(ou) nitrate et(ou) formiate hydrosluble.

2. Procédé suivant la revendication 1, caractérisé en ce que l'on emploie un hydroxyde d'aluminium amorphe en fines particules avec une granulométrie comprise entre 0,1 et 5 μm.

3. Procédé suivant l'une des revendications 1 et 2, caractérisé en ce que l'accélérateur de prise et de durcissement comprend au moins 10% en poids d'hydroxyde d'aluminium amorphe et jusqu'à 90% en poids d'au moins un sulfate et(ou) nitrate et(ou) formiate hydrosoluble(s), les sulfates, nitrates et formiates étant de préférence mis en oeuvre sous forme de sels à cations polyvalents.

4. Procédé suivant l'une des revendications 1 à 3, caractérisé en ce que l'on mélange à l'accélérateur de prise et de durcissement jusqu'à 30% en poids d'au moins une méthyl-, hydroxyéthyl-, hydroxypropyl- ou hydroxybutyl-cellulose ou hydroxyéthylméthyl-, hydroxypropylméthyl- ou hydroxybutylméthyl-cellulose gonflable.

5. Procédé suivant l'une des revendications 1 à 4, caractérisé en ce que l'accélérateur de prise et de durcissement comprend au moins 10% en poids d'hydroxyde d'aluminium amorphe, jusqu'à en poids d'au moins un sulfate et(ou) nitrate et(ou) formiate hydrosoluble(s) et 0 à 30% en poids d'au moins un polymère gonflable.

6. Procédé suivant l'une des revendications 1 à 5, caractérisé en ce que l'accélérateur de prise et de durcissement est mis en oeuvre en combinaison avec des fluidifiants et agents porogènes classiques.

7. Procédé suivant l'une des revendications 1 à 6, caractérisé en ce que l'accélérateur de prise et de durcissement est utilisé à l'état pulvérulent ou en fine dispersion dans de l'eau.

8. Procédé suivant l'une des revendications 1 à 7, caractérisé en ce que l'accélérateur de prise et de durcissement est mis en oeuvre sous forme d'un pré-mélange avec des liants hydrauliques et des agrégats.

9. Accélérateur de prise et de durcissement exempt d'alcali et de chlorure et contenant un oxyde d'aluminium amorphe, caractérisé en ce qu'il contient de l'hydroxyde d'aluminium amorphe en mélange avec au moins un sulfate et(ou) nitrate et(ou) formiate hydrosoluble.

10. Accélérateur de prise et de durcissement suivant la revendication 9, caractérisé en ce qu'il contient de l'hydroxyde d'aluminium amorphe en fines particules d'une granulométrie comprise entre 0,1 et 5 µm.

11. Accélérateur de prise et de durcissement suivant l'une des revendications 9 et 10, caractérisé en ce qu'il contient au moins 10% en poids d'hydroxyde d'aluminium amorphe et jusqu'à 90% en poids d'au moins un sulfate et(ou) nitrate et(ou) formiate hydrosoluble(s), les sulfates, nitrates et formiates étant de préférence mis en oeuvre sous forme de sels à cations polyvalents.

12. Accélérateur de prise et de durcissement suivant l'une des revendications 9 à 11, caractérisé en ce qu'il contient jusqu'à 30% en poids d'au moins une méthyl-, hydroxyéthyl-, hydroxypropyl- ou hydroxybutyl-cellulose ou hydroxyéthylméthyl-, hydroxypropylméthyl- ou hydroxybutylméthyl-cellulose gonflable.

13. Accélérateur de prise et de durcissement suivant l'une des revendications 9 à 12, caractérisé en ce qu'il comprend au moins 10% en poids d'hydroxyde d'aluminium amorphe, jusqu'à 90% en poids d'au moins un sulfate et (ou) nitrate et(ou) formiate hydrosoluble(s) et 0 à 30% en poids d'au moins un polymère gonflable.

14. Accélérateur de prise et de durcissement suivant l'une des revendications 9 à 13, caractérisé en ce qu'il est combiné avec des fluidifiants et agents porogènes connus.

0 076 927

Fig. 1

Fig. 2

Fig.3

Fig.4

Fig.5

Fig.6

Fig.7

Fig.8

Fig.9